# EUROPEAN PATENT APPLICATION

(11) **EP 1 737 199 A1**
(43) Date of publication of application: **27.12.2006**
(21) Application number: 06012396.5
(22) Date of filing: 16.06.2006
(51) Int. Cl.: H04M 1/656, H04M 1/725

(54) **Mobile phone with voice recording function for fixed line telephone**

(30) Priority: 20.06.2005 CN 200510077251
(71) Applicant: Sun, Wen-Hua, Nankang Dist. Taipei 115 (TW)
(72) Inventor: Sun, Wen-Hua, Nankang Dist. Taipei 115 (TW)
(74) Representative: TER MEER - STEINMEISTER & PARTNER GbR

(57) **Abstract**

A mobile phone with built-in voice recorder which can record conversation for a fixed line telephone. The voice recorder is a digital recording device. The voice recorder can record conversation of the mobile phone and externally input audio signal under control of a control unit. The mobile phone has a connecting interface for connecting a telephone adapter connected to a fixed line telephone. The telephone adapter converts a audio signal of the fixed line telephone to the mobile phone for recording.

## Description

### BACKGROUND OF THE INVENTION

### 1. Field of the Invention

The present invention relates to a mobile phone, especially to a mobile phone with voice recording function.

### 2. Description of Prior Art

Mobile phones have become the important tools of communication. In the past, communication was always made at fixed location through fixed network telephones. However, it has been changed into communication at unfixed locations through mobile phones. Spatial limitation of communication has been broken by mobile phones. With the maturity and popularity of mobile communication networks and mobile phones, the conversation quality and additional functions of the mobile phone always keep increasing, however, the costs of phone calling is being low enough to be comparable with fixed telephone, even cheaper. The mobile phone has been used much more frequently than the fixed telephone. There are many people that even use mobile phone as their only communicative tool. Now it can be said that people's dependence upon the mobile phone has exceeded the fixed telephone.

The mobile phones have the advantage of communication everywhere. However, some conventional recording medium such as paper and pen may not be available at place where the user uses mobile phones. Therefore, mobile phones with voice recording ability are provided to record voice message during conversation. For example, U.S. Pat. No. 5740543, No. 5867793 and No. 5995824 disclosed mobile phones with voice recording ability, wherein the conversation in phone call is recorded and user can rehear the voice message after finishing the phone call.

However, the conventional mobile phones with voice recording function cannot provide voice-recording function for fixed-line telephone, such as conventional PSTN (Public Switched Telephone Network) phone, or newly prevailing VoIP (Voice over Internet Protocol) phone, or other types of digital phones. Specific telephone recorder or recording software should be bought when voice recording is needed for those fixed-line telephones. It is extra cost for user. Because most existent mobile phones in the market are capable of voice recording function, users can gain great convenience if the mobile phones with voice recording function can be used with fixed-line telephone to provide voice recording function to fixed-line telephone.

### SUMMARY OF THE INVENTION

It is the object of the present invention to provide a mobile phone with voice recording function for fixed line telephone. The mobile phone comprises a connecting interface connected to a telephone adapter. The telephone adapter is connected to fixed line telephone and used convert the signal of the fixed line telephone to recognizable form of mobile phone. The recognizable form is sent to mobile phone through connecting interface such that the voice recorder can record voice for the fixed line telephone.

The fixed line telephones indicated in the description and claim include PSTN analog and digital phones, or other analog or digital phones connected with fixed lines. The fixed line telephones also include telephones using fixed lines for trunk connection and the last mile using wireless transmission to user ends. Besides, the PSTN phones indicated in the description and claim include telephones connected by PSTN and using PSTN as main communication network with private automatic switch system (such as PABX) at user end.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows the block diagram of the mobile phone according to a preferred embodiment of the present invention.
Fig. 2 shows a using status for the mobile phone according to a preferred embodiment of the present invention.

### DETAILED DESCRIPTION OF THE INVENTION

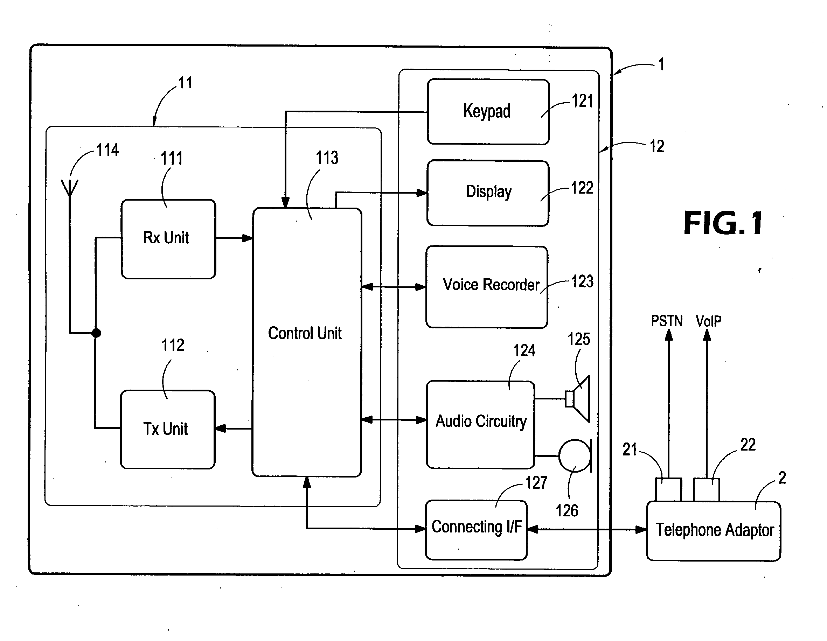

Referring to Fig. 1, a block diagram of the mobile phone according to the present invention may be seen. The mobile phone 1 comprises a main circuitry 11. The main circuitry 11 essentially consists of a receiver 111, a transmitter 112 and a control unit 113. The receiver 111 receives RF signals transmitted from a base station (not shown) through an antenna 114. The RF signals are demodulated by the receiver 111 and then sent to the controller 113 for signal processing. The transmitter 112 modulates a signal sent from the control unit 113 and then sends the modulated signal to the base station through the antenna 114. The control unit 113 is the console for the whole mobile phone and controls the peripheral circuits 12 to operate and cooperate. The peripheral circuits 12 comprise a keypad 121, a display 122, a voice recorder 123, an audio circuitry 124 and a connection interface 127. The peripheral circuits 12 are connected to the control unit 113, respectively. The keypad 121 and the display 122 are used for inputting command and displaying status of the mobile phone. The audio circuitry 124 processes audio signals from the microphone 126 and sends the processed audio signals from the control unit 113 to the loudspeaker 125. The loudspeaker 125 and the microphone 126 are used as earpiece and mouthpiece for the mobile phone 1, respectively.

A voice recorder 123 is electrically connected to the control unit 113 and controlled by the control unit 113. The voice recorder 123 is a digital voice recording device utilizing solid state nonvolatile memory as a storage medium. The solid state nonvolatile memory, for example, can be Flash Memory or Electrically Erasable Programmable Read Only Memory (EEPROM). The control unit 113 executes phone call receiving and making through the receiver 111 and the transmitter 112. At the beginning of a conversation, starting to make phone call or starting to receive phone call, the control unit 113 will automatically activate the voice recorder 123 for voice recording without manual operation. When the phone call is fmished, the control unit 113 will automatically end the voice recorder 123 without manual operation. Alternatively, activating or ending the voice recording can be triggered by the keypad 121 with manual operation.

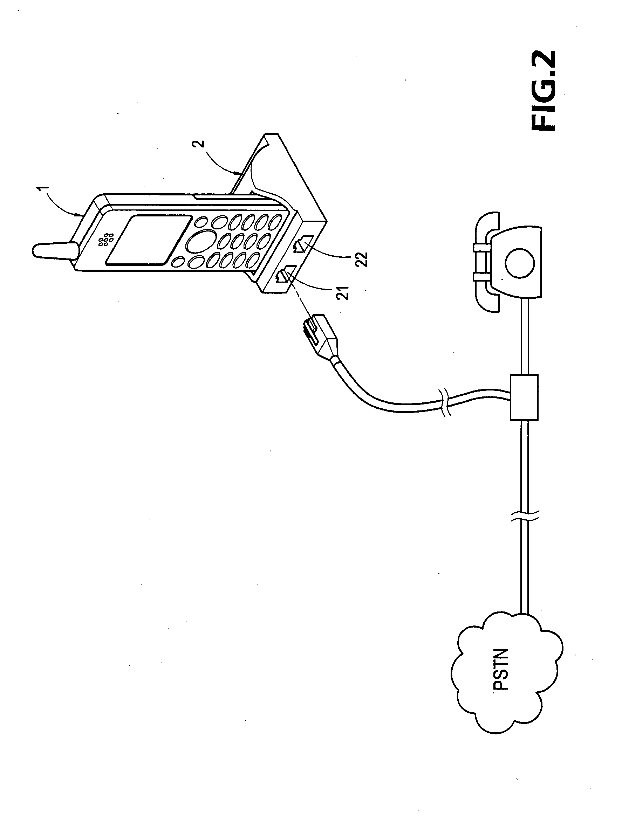

With reference to Figs. 1 and 2, the mobile phone 1 of the present invention comprises a connecting interface 127 connected to the control unit 113. The connecting interface 127 is connected to a telephone adapter 2 through wireless or wired line. The telephone adapter 2 comprises one or more than one ports 21, 22. In a preferred embodiment as shown in Fig. 1, the telephone adapter 2 comprises a PSTN port 21 and a VoIP port 22, which are used to connect to PSTN or VoIP phone or line, respectively. The ports 21, 22 can be optionally selected and the number thereof can be increased or decreased, depending on practical requirements.

The telephone adapter 2 can convert signal of fixed line telephone, which is connected to the ports 21, 22, to digital signal or analog signal recognizable by the mobile phone 1. The converted signal is sent to the control unit 113 through the connecting interface 127. The converted signal is recorded by the voice recorder 123. When the input signal from the telephone adapter 2 is analog type, the control unit 113 will convert the analog signal to digital signal and then sends the digital signal to the voice recorder 123 for recording. The activating and ending of the voice recording can be manually controlled by the keypad 121 of the mobile phone 1. Alternatively, the telephone adapter 2 can detect if the fixed line telephone is starting to converse, make phone call or receive phone call. The telephone adapter 2 sends the audio signal to the control unit 113 while the fixed line telephone is starting to converse, make phone call or receive phone call. For example, an apparent variation of signal and/or voltage will appear in the transmission line of the fixed line telephone during the period of standby, conversation, ring back tone of making phone call or ring tone of receiving phone call. The telephone adapter 2 can detect the status of the fixed line telephone according to the variation, and then utilize the mobile phone 1 of the present invention to achieve the automatic voice recording function. The telephone adapter 2 preferably has charging and/or calling or called number identifying function. The former function charges the mobile phone when it is connected to the adapter 2; the later function send calling or called number of the fixed line telephone with audio signal to the mobile phone 1. Therefore, the voice data in the voice recorder 123 can be stored with calling/called start time, conversation start time, conversation duration and calling/called number.

## Claims

1. A mobile phone (1) with voice recording function for fixed line telephone, comprising
a main circuitry (11) having bi-directional communication ability with a mobile communication network, including;
a receiver (111) receiving a wireless signal from the mobile communication network;
a transmitter (112) sending a wireless signal to the mobile communication network;
a control unit (113) electrically connected to the receiver (111) and the transmitter (112) for controlling the receiver (111) and the transmitter (112);
a voice recorder (123) electrically connected to the control unit (113) and activated or ended by the control unit (113); and
a connecting interface (127) electrically connected to the control unit (113) and used for connecting to an external audio unit , an audio signal from the audio unit being input to the control unit (113) through the connecting interface (127), the control unit (113) controlling the voice recorder (123) to record the input audio signal.

2. The mobile phone (1) with voice recording function as in claim 1, wherein the audio unit is a telephone adapter (2), the telephone adapter (2) comprises at least one port for connecting to a fixed line telephone or line, the telephone adapter (2) converting a telephone signal of the fixed line telephone connected to the port to a format recognizable by the mobile phone (1).

3. The mobile phone (1) with voice recording function as in claim 2, wherein the port (21) is connected to PSTN.

4. The mobile phone with voice recording function as in claim 2, wherein the port (22) is connected to VoIP.

5. The mobile phone (1) with voice recording function as in claim 2, wherein the telephone adapter (2) has detection ability for start and stop of conversation, the telephone adapter (2) sending audio signal of conversation to the control unit (113) at start of conversation of the fixed line telephone connected to the port, the control unit (113) automatically activating the voice recorder (123) to make a conversation record, and the voice recorder (123) being automatically ended when the conversation is finished.

6. The mobile phone (1) with voice recording function as in claim 5, wherein the conversation record is stored with at least one of conversation start time and conversation duration.

7. The mobile phone (1) with voice recording function as in claim 2, wherein the telephone adapter (2) has detection ability for start and stop of making and receiving phone call, the telephone adapter (2) sending audio signal of phone call to the control unit (113) at start of making phone call or receiving phone call of the fixed line telephone connected to the port, the control unit (113) automatically activating the voice recorder (123) to make a record, and the voice recorder (123) being automatically ended when making phone call, receiving phone call or conversation is fmished.

8. The mobile phone (1) with voice recording function as in claim 7, wherein the record is stored with at least one of calling start time, called start time, conversation start time and conversation duration.

9. The mobile phone (1) with voice recording function as in claim 2, wherein the telephone adapter (2) has detection ability for start and stop of conversation of receiving phone call and for start and stop of making phone call, the telephone adapter (2) sending audio signal of phone call to the control unit (113) at start of making phone call or start of conversation of receiving phone call of the fixed line telephone connected to the port , the control unit (113) automatically activating the voice recorder (123) to make a record, and the voice recorder (123) being automatically ended when making phone call or conversation is finished.

10. The mobile phone (1) with voice recording function as in claim 9, wherein the record is stored with at least one of calling start time, conversation start time, and conversation duration.

11. The mobile phone (1) with voice recording function as in claim 1, wherein the voice recorder (123) is a digital recording device.

12. The mobile phone (1) with voice recording function as in claim 11, wherein the voice recorder (123) utilizes a solid state non-volatile memory as a storage medium.

13. The mobile phone (1) with voice recording function as in claim 12, wherein the storage medium of the voice recorder (123) is a flash memory.

14. The mobile phone (1) with voice recording function as in claim 12, wherein the storage medium of the voice recorder (123) is an EEPROM.

15. The mobile phone (1) with voice recording function as in claim 2, wherein the telephone adapter (2) has charging function for mobile phone connected thereon.

16. The mobile phone (1) with voice recording function as in claim 2, wherein the telephone adapter (2) has calling/called number identifying function for incorporating calling number or called number of the fixed line telephone to input to the mobile phone (1) with audio signal.

17. The mobile phone (1) with voice recording function as in claim 16, wherein the record is stored with at least one of calling start time, called start time, conversation start time, conversation duration and calling/called number.
